# EUROPÄISCHE PATENTANMELDUNG

(11) **EP 1 763 170 A1**
(43) Veröffentlichungstag der Anmeldung: **14.03.2007**
(21) Anmeldenummer: 05019564.3
(22) Anmeldetag: 08.09.2005
(51) Int. Cl.: H04L 12/24

(54) **Positionierung von Netzelementen in einer Netzübersicht**

(71) Anmelder: SIEMENS AKTIENGESELLSCHAFT, 80333 München (DE)
(72) Erfinder: Rosner, Sönke, 82008 Unterhaching (DE)

(57) **Zusammenfassung**

Ein Netzelement NE wird in einer Übersicht MA eines Kommunikationsnetzes KN, die eine geographische Landkarte LK mit einem satellitengestützten Koordinatenraster RA umfasst, nach Zugriff auf dem Netzelement zugeordnete, satellitengestützte Koordinaten KO in der Netzübersicht an der Stelle vor der geographischen Landkarte LK positioniert, die im Koordinatenraster RA mit den Koordinaten KO des Netzelements NE übereinstimmt.

## Beschreibung

In dem internationalen Standard M.3010 (02/2000) der ITU-T ist eine Referenzarchitektur eines Telecommunications Management Network (TMN) zur Überwachung und Steuerung eines Kommunikationsnetzes beschrieben, bei der davon ausgegangen wird, dass das von dem TMN gesteuerte Netz unterschiedliche Typen von Netzelementen umfasst, die mit Hilfe von passenden Kommunikationsmechanismen gesteuert werden. Die Mechanismen sind z.B. Protokolle mit Regeln für einen Austausch von Management Informationen. Der Austausch wird z.B. mit Hilfe von Meldungen oder Nachrichten bewirkt. Die Informationen werden auch Objektmodell genannt.

Das TMN umfasst u.a. folgende Funktionalitäten:
- Operations Systems Function (OSF), die das "eigentliche" Management des Telekommunikationsnetzes realisiert.
- Workstation Function (WSF), die zur visuellen Darstellung der Steuervorgänge und des Netzzustandes dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der meist nicht international genormt ist. Die Summe aller Management Informationen des NE wird als Management Information Base (MIB) des NE bezeichnet. Sie wird im Weiteren auch NE-MIB genannt.
- Transformation Function (TF), die zur Verbindung von Komponenten mit unterschiedlichen Kommunikationsmechanismen und insbesondere zur Anbindung von Netzelementen, die keine mit einer internationalen Norm kompatible NEF aufweisen, an das TMN eingesetzt wird. Sie wird in dem Standard M.3010 (05/96) auch als Mediation Function bzw. als Q-Adaption Function bezeichnet.

Des Weiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse - auch Produkte genannt - bewirkt, die beispielsweise als Netzelement (NE), Operations System (OS), Applikation, Terminal, Router, Switch, Datenbankserver oder Computerprogrammprodukt (auch Programm, Applikationen oder Software genannt) ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentral angeordnet ist, während die NE in dem Netz dezentral auf eine Vielzahl von Standorten verteilt sind.

Ein OS kann mehrere Programme umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezifische Teilmenge der Ressourcen des Netzes modelliert, visualisiert und gesteuert wird.

Die Programme werden von Hardware (z.B. Prozessor, i/o Baugruppe) ausgeführt, die in den gegenständlichen Erzeugnissen vorgesehen ist. Diese Ausführung wird von Supportsoftware (z.B. Multitasking bzw. Multithreading Betriebssystem, Datenbanksystem, Windows System) unterstützt.

Die einzelnen Funktionseinheiten können durch integrierte, von einem Hersteller realisierte und verkaufte Produkte oder durch ein System mehrerer, von unterschiedlichen Herstellern getrennt realisierter und verkaufter Produkte durchgeführt werden, wobei im zweiten Fall die Produkte jeweils einen Teil der Gesamtfunktionalität durchführen und so zusammenwirken, dass insgesamt die gleiche Funktionalität realisiert wird wie bei einer integrierten Realisierung der Funktionalitäten.

Diese Produkte können auch als Computerprogrammprodukte ausgebildet sein, die von Hardware (z.B. zumindest einem Prozessor) ausgeführt werden, von der die gegenständliche Ausführungsumgebung der Produkte gebildet wird. Diese Ausführung wird häufig von Supportsoftware (z.B. Multitasking bzw. Multithreading Betriebssystem, Datenbanksystem, Windows System) unterstützt.

Die Workstation Function kann auch eine visuelle Netzübersicht umfassen, die auch Networkmap genannt wird. In der Networkmap werden üblicherweise die Netzelemente des Netzes sowie die zwischen den Netzelementen bestehenden Verbindungen dargestellt.

Insgesamt ist die Umsetzung der beschriebenen Architektur in konkrete Lösungen infolge der Verteiltheit des Systems und der Vielzahl an unterschiedlichen Funktionalitäten, Systemkomponenten und Anforderungen eine hochkomplexe technische Problemstellung.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Die zeitgemäßen Darstellungstechnologien sind durch große Bildschirme, schnelle Bildverarbeitungsprozessoren und vorgefertigte Darstellungsfenster gekennzeichnet. Zudem sind im Internet eine Vielzahl von geographischen Bildern (Landkarten, Stadtpläne, etc...) erhältlich. Dies führt in Kombination dazu, dass in Netzübersichten zunehmend geographische Bilder als Hintergrund eingefügt werden.
- Damit entsteht nach Erkenntnis der Erfindung das neue Bedürfnis, Netzelemente in der Netzübersicht so zu positionieren, dass sie genau dort vor dem als Hintergrund aktuell eingefügten geographischen Bild angeordnet sind, wo sie in der realen Welt aufgebaut sind.
- Dabei ist eine besonders genaue Positionierung erforderlich, da die im Internet erhältlichen topographischen Daten und die zeitgemäßen Darstellungstechnologien ein stufenloses Zoomen (Vergrößern / Verkleinern) ermöglichen, bei dem ausgehend von einer eher globalen Übersicht des gesamten Netzen bis auf einzelne Straßenzüge, Gebäude und sogar deren Grundrisse fokussiert werden kann und die Netzelemente auch bei einer derart starken Fokussierung immer noch korrekt positioniert sein sollen:

- Es sind mittlerweile satellitengestützte, geographische Landkarten mit Koordinatenraster erhältlich. Bekannt ist beispielsweise eine Stütze der Koordinaten auf das satellitengestützte GPS (Global Positioning System). Alternativen zu GPS sind beispielsweise Galileo und Euteltracs in Europa, MTSAT (Multifunction Transport Satellite System) in Japan, BEIDOU in China oder GLONASS in Russland. Wenn derartige Karten als Hintergrundbilder verwendet werden, wird eine korrekte Positionierung vor einer derartigen Hintergrundkarte grundsätzlich automatisierbar, weil die Hintergrundkarte nicht länger eine bedeutungslose Bitmap ohne konkrete Semantik ist, sondern eine bekannte geographische Struktur erhält, die digital verarbeit werden kann.
- Eine korrekte Konfiguration der Networkmap sowie die fortdauernde Synchronisation der Networkmap mit dem Netz werden bei einer derart weit reichenden Flexibilisierung der Netzübersicht zu einer komplexen und schwierigen Aufgabe, die vor allem bei größeren Netzen sehr aufwändig werden kann.

Die bekannten Techniken lösen die erkannte Problematik nicht oder haben zumindest unerwünschte Nebeneffekte:
- Bekannt ist der Einsatz von geographischen Bildern, die in Form von einfachen Bitmaps als Hintergrund von Fenstern eingesetzt werden, in denen die Netzübersichten oder Ausschnitte davon dargestellt werden. Bei einfachen Lösungen besteht keine semantische Korrelation zwischen dem Hintergrundbild und der Position der Netzelemente, d.h. das Hintergrundbild dient in erster Linie als dekoratives Element, nicht jedoch zur visuellen Darstellung der Position der Netzelemente.
- In zeitgemäßen TMN Systemen kann bei Einsatz einer Hintergrund-Bitmap die Position eines Netzelements dadurch visualisiert werden, dass es durch den Bediener des Management Systems manuell ausgewählt und in einer Netzübersicht an der Stelle vor einem passenden geographischen Hintergrundbild platziert wird, an der es sich in der Realität befindet. Dieser Vorgang wird iterativ für jedes Netzelement durchgeführt. Bei Austausch der Landkarte müssen dabei regelmäßig alle Netzelemente von Hand neu positioniert werden. Ein Zoomen der Landkarte sowie eine automatische Positionierung ist nicht möglich, weil keine weiterführenden Sekundärdaten vorhanden sind, an Hand derer man bestimmen könnte, welche Stelle im Fenster welchem Ort in der realen Welt entspricht.

Eine Lösung für die erfindungsgemäß erkannte Problemsituation sowie vorteilhafte Ausgestaltungen dieser Lösung sind in den Patentansprüchen angegeben, die ebenfalls der Beschreibung der Erfindung dienen und mithin Teil der Beschreibung sind.

Die Erfindung wird nachfolgend anhand von Ausführungsbeispielen, die auch in den Figuren dargestellt sind, erläutert. Es sei betont, dass die aufgezeigten Ausführungen der Erfindung lediglich beispielhafter Natur sind und somit auch dann nicht einschränkend zu verstehen sind, wenn eine Ausführung der Erfindung sehr detailgetreu dargestellt wird. Es zeigt:

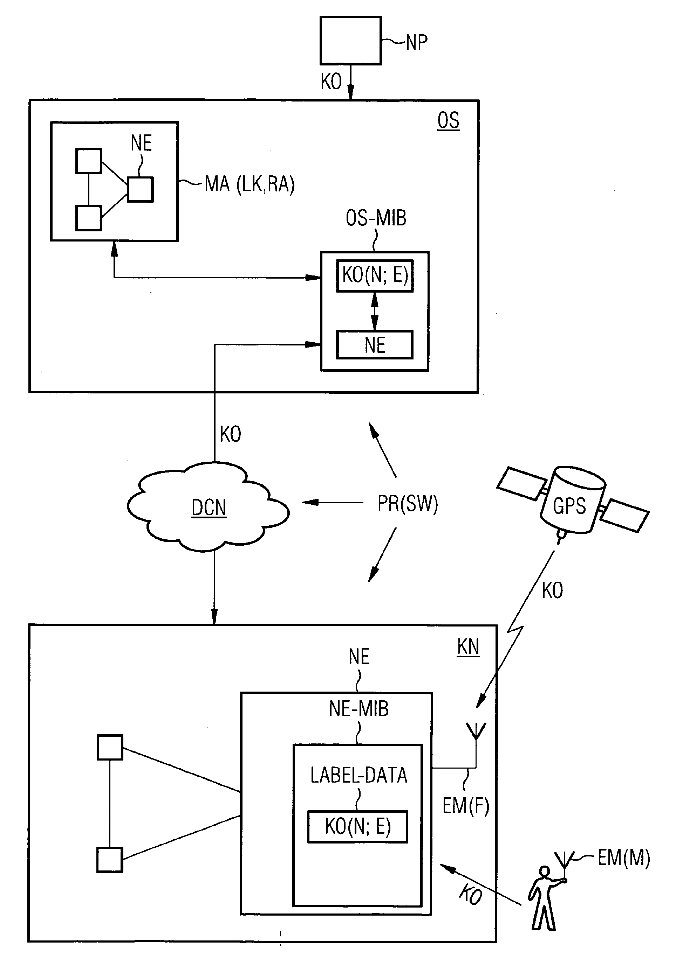

Figur 1 ein beispielhaftes erfindungsgemäßes System, umfassend als Netzelement NE und Managementsystem OS ausgebildete Produkte PR, die über ein Data Communication Netzwork DCN miteinander verbunden sind und von denen die Erfindung durchgeführt wird.

Die Produkte PR können als Computerprogrammprodukte SW ausgebildet sein. Zur vereinfachten Darstellung der Erfindung wird davon ausgegangen, dass jedes Computerprogrammprodukt SW eindeutig einer bestimmten Datei entspricht. Für den Fachmann ist jedoch klar, dass diese Einschränkung nicht zwingend ist und ein Computerprogrammprodukt SW jederzeit auch eine Vielzahl von Dateien umfassen kann.

Gemäß einer bevorzugten Ausgestaltung der Erfindung werden Netzelemente NE mit satellitengestützten Koordinaten KO - beispielsweise der Form N: x°xx'xx.x" und E: y°yy'yy.y" - gekennzeichnet. Bei gleichzeitiger Verwendung einer Landkarte LK mit einem satellitengestützten Koordinatenraster RA in der Netzdarstellung (Netzübersicht, Networkmap) MA eines Managementsystems OS kann die Platzierung der Netzelemente NE in der Netzdarstellung MA automatisch durch Korrelation der Koordinaten KO mit dem Koordinatenraster RA, d.h. ohne manuelle Operationen eines Systembedieners erfolgen, beispielsweise indem jedes Netzelemente NE in der Netzübersicht MA an der Stelle vor der geographischen (Hintergrund-) Landkarte LK positioniert wird, die im Koordinatenraster RA mit den Koordinaten KO des jeweiligen Netzelements NE übereinstimmt.

Besonders schöne Vorteile ergeben sich, wenn die Koordinaten KO in der lokalen Datenhaltung NE-MIB der Netzelemente NE hinterlegt werden. Beispielsweise können sie in Kennzeichnungsdaten LABEL-DATA eingefügt und gespeichert werden. Durch Speicherung von Koordinaten KO in Netzelementen NE und gleichzeitiger Nutzung einer graphischen Landkarte LK mit Koordinatenraster RA in der Netzdarstellung MA können die Koordinaten KO vom Netzelement NE durch ein Managementsystem OS ausgelesen werden und automatisch an die entsprechende Stelle in der Netzdarstellung MA angeordnet werden.

Ein Austausch bzw. Auswechseln der Landkarte LK mit Koordinatenraster RA ist ohne weiteres möglich, wenn sich die Platzierung der Netzelemente stets an dem Koordinatenraster RA orientiert, d.h. insbesondere bei jeder Änderung des Maßstabs der Landkarte LK wiederholt, z.B. neu ermittelt und nachgeführt wird.

Auch ein Vergrößern bzw. Verkleinern (Zoomen) der Landkarte LK in der Netzdarstellung MA ist auf diese Weise möglich. Dabei wandern die Koordinatenlinien in der Landkarte LK nur enger zusammen oder weiter auseinander und die Position der Netzelemente wird im Anschluss entsprechend der geänderten Linienführung so angepasst, dass ihre bisherige relative Position zu den Linien bestehen bleibt. Ändert sich beispielsweise der Abstand zwischen zwei Linien durch ein Zoomen von 4 cm auf 8 cm, so wird ein Netzelement NE, das vor dem Zoomen von der einen Linie 3 cm und der anderen Linie 1 cm entfernt war, so neu positioniert, dass es im Anschluss von der einen Linie 6 cm und der anderen 2 cm entfernt ist. Mithin bleibt also der relative Abstand des Netzelements NE zu den Linien konstant.

Die Koordinaten KO können bereits vorab bekannt sein, wenn z.B. aus einer - vorzugsweise toolgestützten - Netzplanung NP die Koordinaten KO geliefert werden, oder erst vor Ort bei Installation der Netzelemente NE ermittelt werden. Die Ermittlung vor Ort kann z.B. mit Hilfe eines mobilen oder fest installierten Empfangsgeräts EM(F) für eine automatische, satellitengestützte Positionsermittlung, d.h. Ermittlung der Koordinaten KO bewirkt oder unterstützt werden.

In einer Ausgestaltung der Erfindung werden die Koordinaten KO, beispielsweise in der From N: x°xx'xx.x" und E: y°yy'yy.y", - vorzugsweise bei Inbetriebnahme eines Netzelements NE - dauerhaft (persistent) im Netzelement NE gespeichert. Dies kann z.B. über eine Erweiterung der bestehenden Kennzeichnungsdaten LABEL-DATA des Netzelements NE erfolgen oder durch im Netzelement NE zu definierende neue Datenablagemöglichkeiten.

Die Konfiguration der Koordinaten KO in einem Netzelement NE kann manuell erfolgen, indem die Koordinaten KO von Hand eingegeben werden. Dies kann z.B. durch Übertrag aus einer durch die Netzplanung NP vorgegebenen Liste bewirkt werden. Bei Verwendung eines mobilen Empfängers EM(M) zur satellitengestützten Positionsermittlung werden die Koordinaten KO z.B. vom Installationspersonal ausgelesen und über eine Eingabemaske an einem lokalen Management System (Local Craft Terminal) manuell in die Datenhaltung NE-MIB des Netzelement NE eingegeben. Alternativ können die Koordinaten KO in diesem Fall über eine Datenschnittstelle automatisch von dem mobilen Empfangsgerät EM(M) zur satellitengestützten Positionsermittlung in die lokale Datenhaltung NE-MIB eines Netzelements NE eingespielt werden, wodurch Fehleingaben vermieden werden.

Die Konfiguration der Koordinaten KO in einem Netzelement NE wird gemäß einer Variante der Erfindung mit Hilfe eines fest installierten Empfängers EM(F) automatisch durchgeführt. Dies hat den Vorteil, dass die Koordinaten KO jederzeit korrekt sind. Fehlerhafte Koordinaten KO, bspw. durch Fehleingaben oder Umzug der Netzelemente NE werden somit wirkungsvoll vermieden.

Zur Steigerung der Darstellungsgeschwindigkeit der Netzübersicht MA werden die bei der Installation eingegebenen Koordinaten KO durch das Managementsystem OS aus der lokalen Datenhaltung NE-MIB des Netzelements NE ausgelesen und in der lokalen Datenbasis OS-MIB des Managementsystems OS gespeichert.

Dieses Auslesen kann beispielsweise beim Erkennen eines Netzelements NE durch das Managementsystem OS über das Data Communication Network DCN durchgeführt werden. In diesem Fall wird in der bevorzugten Ausgestaltung anschließend geprüft, ob für das betreffende Netzelement NE (z.B. identifiziert durch Name und/oder IP Adresse) bereits ein Eintrag in der Netzübersicht MA vorhanden ist oder nicht.

Ist für das entsprechende Netzelement NE kein Eintrag vorhanden, so wird das Netzelement NE in der Netzübersicht eingefügt und entsprechend seiner Koordinaten KO so positioniert, dass es vor der geographischen Hintergrundlandkarte LK an der Stelle platziert wird, die im Koordinatenraster RA mit den Koordinaten KO übereinstimmt.

Ist für das entsprechende Netzelement NE bereits ein Eintrag in der Netzübersicht MA vorhanden, so werden die vom Netzelement NE ausgelesenen Koordinaten mit der Position des Eintrags verglichen. Bei Übereinstimmung erfolgt keine weitere Aktion im Managementsystem OS. Sollten die Daten unterschiedlich sein, so wird der Eintrag neu positioniert und alle mit ihm verbundenen Objekte (z.B. Leitungen, Kabel, etc...) entsprechend nachgeführt. Die neue Positionierung kann z.B. dadurch gewirkt werden, dass der bisherigen Eintrag in der Netzübersicht MA automatisch gelöscht und ein neuer Eintrag erzeugt und entsprechend den neuen Koordinaten KO in der Netzübersicht MA passend vor der zur Zeit als Hintergrund verwendeten Landkarte LK positioniert wird.

Bei einer alternativen Ausgestaltung der Erfindung werden die bereits aus der Netzplanung NP vorhandenen Koordinaten KO vorab, d.h. vor Installation der Netzelemente NE, in die Datenhaltung OS-MIB des Managementsystems OS eingespielt. Dies wird bevorzugt über eine automatische Datenschnittstelle bewirkt. Die Koordinaten KO werden mit den Netzelementen NE über eine eindeutige Kennzeichnung der Netzelemente NE korreliert (z.B. Name des Netzelements NE oder dessen IP Adresse), die zusammen mit Koordinaten KO übermittelt wird.

Bei Erkennen eines Netzelements NE werden in diesem Fall die Koordinaten KO von dem Managementsystem OS in die lokale Datenhaltung NE-MIB des erkannten Netzelements NE über das Data Communication Network DCN geladen. Dies hat den Vorteil, dass im weiteren Verlauf bei Verwaltung des Netzelements NE die Koordinaten KO auch lokal, d.h. vor Ort verfügbar sind. Zudem entfällt die lokale Konfiguration der Koordinaten KO bei Inbetriebnahme.

Die Koordinaten KO im Netzelement NE werden geändert, wenn ein bereits installiertes Netzelement an einen anderen geographischen Ort platziert wird. Anschließend wird der zugehörige Eintrag in der Netzübersicht MA wie vorstehend beschrieben neu positioniert.

Mit der Erfindung ist eine Vielzahl von weiteren Vorteilen verbunden:
- Das Vergrößern und Verkleinern (Zoomen) der Netzübersicht MA ist ohne weiteres möglich, da eine Anpassung der Position der Netzelemente NE durch Vergleich von deren Koordination KO mit dem jeweils aktuellen Koordinatenraster RA jederzeit möglich ist.
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software und über mehrere physikalische Erzeugnisse / Computerprogrammprodukte verteilt realisiert werden kann.

## Patentansprüche

1. Verfahren zur Positionierung eines Netzelements (NE) in einer Übersicht (MA) eines Kommunikationsnetzes (KN), wobei
- die Netzübersicht eine geographische Landkarte (LK) mit einem satellitengestützten Koordinatenraster (RA) umfasst,
- dem Netzelement satellitengestützte Koordinaten (KO) zugeordnet sind,
mit folgenden Schritten:
(a) Zugriff auf die Koordinaten des Netzelements;
(b) Positionierung des Netzelements in der Netzübersicht in Abhängigkeit von den Koordinaten und dem Koordinatenraster.

2. Verfahren nach dem vorstehenden Anspruch,
bei dem die Positionierung des Netzelements in der Netzübersicht in Abhängigkeit von den Koordinaten und dem Koordinatenraster so ausgebildet ist, dass das Netzelement in der Netzübersicht an der Stelle vor der geographischen Landkarte positioniert wird, die im Koordinatenraster mit den Koordinaten des Netzelements übereinstimmt.

3. Verfahren nach einem der vorstehenden Ansprüche,
bei dem die Koordinaten dem Netzelement automatisch zugeordnet werden durch Übermittlung der Koordinaten von ein Empfangsgerät (EM) zur satellitengestützten Positionsermittlung und/oder von einer Netzplanung (NP).

4. Verfahren nach dem vorstehenden Anspruch,
bei dem die Koordinaten während der Installation des Netzelements zugeordnet werden.

5. Verfahren nach einem der vorstehenden Ansprüche,
bei dem die Positionierung bei einer Änderung der Landkarte, einer Veränderung des Maßstabs des Koordinatenrasters und/oder einer Änderung der Koordinaten wiederholt wird.

6. Verfahren nach einem der vorstehenden Ansprüche,
bei dem die Koordinaten in der lokalen Datenhaltung (NE-MIB) des Netzelements, insbesondere in Kennzeichnungsdaten (LABEL-DATA), gespeichert werden.

7. Produkt (PR), umfassend Mittel, die zur vollständigen Durchführung des vorstehenden Verfahrens eingerichtet sind.

8. Produkt, ausgebildet als Netzelement, umfassend satellitengestützte Koordinaten, die zur Durchführung des vorstehenden Verfahrens verwendet werden.

9. Produkt, ausgebildet als Netzübersicht eines Netzmanagementsystems (OS), mit einem satellitengestützten Koordinatenraster, das zur Durchführung des vorstehenden Verfahrens verwendet wird.

10. Produkt nach einem der vorstehenden Produktansprüche, ausgebildet als Computerprogrammprodukt (SW) mit Programmcode, der so strukturiert ist, dass das Verfahren immer dann vollständig durchführt wird, wenn der Programmcode des Produkts von zumindest einem Prozessor ausgeführt wird.
